# EUROPÄISCHE PATENTSCHRIFT

(11) **EP 4 392 226 B1**
(45) Veröffentlichungstag und Bekanntmachung des Hinweises auf die Patenterteilung: **11.06.2025**
(21) Anmeldenummer: 22768679.7
(22) Anmeldetag: 22.08.2022
(51) Int. Cl.: B29C 49/42, B29C 49/06, B29L 31/00

(54) **VORRICHTUNG ZUM HERSTELLEN VON BEHÄLTERN AUS VORFORMLINGEN AUS THERMOPLASTISCHEM MATERIAL**
DEVICE FOR PRODUCING CONTAINERS FROM PREFORMS MADE OF THERMOPLASTIC MATERIAL
DISPOSITIF DE PRODUCTION DE CONTENANTS À PARTIR DE PRÉFORMES EN MATIÈRE THERMOPLASTIQUE

(30) Priorität: 25.08.2021 DE 102021122020
(43) Veröffentlichungstag der Anmeldung: 03.07.2024
(73) Patentinhaber: KHS GmbH, 44143 Dortmund (DE)
(72) Erfinder: BAUMGARTE, Rolf, 22926 Ahrensburg (DE); LINKE, Michael, 22159 Hamburg (DE); LEWIN, Frank, 22889 Tangstedt (DE)
(74) Vertreter: Greiche, Albert
(86) Internationale Anmeldenummer: PCT/EP2022/073283
(87) Internationale Veröffentlichungsnummer: WO 2023/025706

(56) Entgegenhaltungen:
- EP-B1- 2 114 804
- DE-A1- 102013 014 618
- DE-A1- 102014 005 321
- US-A1- 2013 062 163

## Beschreibung

Die Erfindung betrifft eine Vorrichtung zum Herstellen von Behältern aus Vorformlingen aus thermoplastischem Material.

Zur Herstellung von Behältern, insbesondere Behältern aus Kunststoff, können Verfahren verwendet werden, die Vorformlinge mittels Blasformung oder hydraulischer Formung umformen. Für die Produktion von großen Stückzahlen werden Rotationsmaschinen verwendet. Mit den Rotationsmaschinen werden nacheinander eine Vielzahl von Kunststoff-Vorformlingen an eine Vielzahl von Formvorrichtungen übergeben, die mit einem Rotorabschnitt der Rotationsmaschine, z. B. einem Blasrad oder einem Füllrad, verbunden sind. Zur Übergabe der Vorformlinge an die Rotationsmaschine bzw. zur Abnahme der Behälter von der Rotationsmaschine können die Behälter oder Vorformling mit Greifeinrichtungen gegriffen bzw. bereitgestellt werden. Die Greifeinrichtungen greifen die Behälter oder Vorformlinge dabei in deren Halsbereich. Dazu werden die Greifeinrichtungen in radialer Richtung in Bezug auf den Rotorabschnitt verschoben.

Aus EP 2 114 804 B1 ist eine Rotationsmaschine bekannt, bei der Zangen an Tragarmen befestigt sind. Die Tragarme sind teleskopierbar ausgebildet. Mittels Kurvenbahnen werden die Tragarme teleskopartig in radialer Richtung aus- und eingefahren, so dass ebenfalls die an ihnen befestigten Zangen aus- und eingefahren werden. Die Tragarme weisen dabei Lineargleitlager oder geschmierte Wälzkörper-Linearführungen auf. Weiter können die Tragarme um eine vertikale Achse geschwenkt werden. Auch die Schwenkbewegung wird mittels der Kurvenbahnen gesteuert.

Aus DE 10 2014 005321 A1 sind weiter eine Vorrichtung und ein Verfahren zum Transportieren und Handhaben von Behältern, insbesondere von Behältern aus einem thermoplastischen Material, bekannt, wobei die Behälter von der Transportvorrichtung in einer Transportrichtung von einer Eingabestelle zu einer Ausgabestelle transportiert werden, wobei die Transportvorrichtung wenigstens eine sich in Transportrichtung bewegende Handhabungseinrichtung zur insbesondere gleichzeitigen Handhabung eines oder mehrerer der Behälter aufweist, und wobei die Handhabungseinrichtung relativ zur Transportvorrichtung bewegbar angeordnet ist für eine Bewegung in einer von der Transportrichtung abweichenden Richtung, wobei die Transporteinrichtung wenigstens einen Motor aufweist, mittels dem die wenigstens eine Handhabungseinrichtung motorisch in der von der Transportrichtung abweichenden Richtung bewegbar ist.

Weiter ist aus US 2013/0062163 A1 eine Vorrichtung zum Transportieren von Hohlkörpern bekannt, die Folgendes umfasst: mindestens ein Element zum Ergreifen eines Hohlkörpers, wobei das Element mindestens einen Nockenstößel aus einem elektrisch leitenden Material aufweist; mindestens einen festen Nocken, der dazu bestimmt ist, mit dem Nockenstößel in Eingriff zu kommen, wobei der Nocken aus einem elektrisch leitenden Material besteht; eine Kontaktschicht, die aus einem elektrisch isolierenden Material besteht und zwischen dem Nocken und dem Nockenstößel angeordnet ist; wobei der Nockenstößel mit einem ersten elektrischen Signal verbunden ist, während der Nocken mit einem zweiten elektrischen Signal verbunden ist, wobei ein Element so positioniert ist, dass es den elektrischen Kontakt zwischen dem Nockenstößel und dem Nocken erfasst.

Aus DE 10 2013 014618 A1 ist eine Synchronlaufsicherung für Übergabestationen für Vorrichtungen zum Handhaben von Behältern, insbesondere zum Handhaben von flaschenartigen Behältern aus Glas oder Kunststoff mit einem ersten und eine zweiten Drehelement, bekannt, die jeweils mit Aufnahmeelementen für die Behälter versehen sind und jeweils einen motorischen Antrieb aufweisen, wobei die Drehelemente so zueinander angeordnet sind, dass die Behälter in einem Übergabebereich von einem der ersten Aufnahmeelemente auf eines der zweiten Aufnahmeelemente übertragbar sind. Dabei hat sich gezeigt, dass die Drehelemente jeweils drehverbunden ein Steuerelement mit Eingriffselementen aufweisen, dass die Steuerelemente sich kämmend miteinander im Eingriff befinden, wobei die Steuerelemente so angeordnet sind, dass sie sich im Betriebsfall während der Drehbewegung der Drehelemente berührungslos im Eingriff befinden und dass sie sich im Störungsfall berührend im Eingriff.

Aufgabe der Erfindung ist es, eine Vorrichtung zum Herstellen von Behältern aus Vorformlingen aus thermoplastischem Material bereitzustellen, die kostengünstiger sind und erhöhte Hygieneanforderungen erfüllen.

Die Aufgabe wird gelöst durch die Merkmale der unabhängigen Ansprüche. Vorteilhafte Weiterbildungen sind Gegenstand der abhängigen Ansprüche sowie der folgenden Beschreibung.

Bei einer Vorrichtung zum Herstellen von Behältern aus Vorformlingen aus thermoplastischem Material, wobei die Vorrichtung mindestens eine Transporteinrichtung mit mindestens einer Übergabeeinheit zum Bewegen von Behältern und/oder Vorformlingen zwischen einer ersten Übergabeposition und einer zweiten Übergabeposition umfasst, wobei die Übergabeeinheit ein Greifelement zum Halten eines Behälters und/oder Vorformlings aufweist, ist erfindungsgemäß vorgesehen, dass die Übergabeeinheit einen Übergabearm aufweist, mit dem das Greifelement verbunden ist und der an der mindestens einen Übergabeeinheit berührungslos beweglich gelagert ist.

Gemäß der Erfindung wird damit eine verschleiß- und schmierstofffreie bewegliche Lagerung des Übergabearms an der Übergabeeinheit der Vorrichtung zum Herstellen von Behältern aus Vorformlingen bereitgestellt. Der Übergabearm mit dem Greifelement ist an der Übergabeeinheit berührungslos beweglich gelagert. Durch die berührungslose bewegliche Lagerung des Übergabearms wird Abrieb vermieden. Weiter werden für die Bewegung des Übergabearms keine Schmierstoffe, wie Öl oder Fett, benötigt. Damit wird eine Kontamination der Behälter oder Vorformlinge bzw. dem späteren Inhalt der Behälter vermieden, so dass erhöhte Hygieneanforderungen erfüllt werden können. Weiter wird damit die Wartung des Übergabearms vereinfacht, so dass damit Kosten gespart werden können.

Denkbar ist, dass der Übergabearm zum Beispiel an der mindestens einen Übergabeeinheit mittels eines linearen Führungselements berührungslos beweglich gelagert sein kann.

Damit kann eine lineare Bewegung des Übergabearms durchgeführt werden, wobei der Übergabearm in Verbindung mit dem linearen Führungselement eine teleskopartige Bewegung durchführen kann.

Gemäß einem Beispiel kann das lineare Führungselement ein Schienenelement und ein auf dem Schienenelement berührungslos gelagertes, insbesondere luftgelagertes, magnetisch gelagertes oder hydrostatisch gelagertes, Schlittenelement aufweisen, das entlang des Schienenelements beweglich und mit dem Übergabearm verbunden ist.

Auf diese Weise wird eine effektive und einfach aufgebaute wartungsarme lineare Führung für den Übergabearm bereitgestellt. In dem Beispiel der hydrostatischen Lagerung kann diese wasserbasiert sein. Die Vorrichtung kann dann weiter eine Wasserrückführung aufweisen.

Weiter kann der Übergabearm an der mindestens einen Übergabeeinheit beispielsweise mittels eines Schwenklagers berührungslos beweglich gelagert, insbesondere luftgelagert, magnetisch gelagert oder hydrostatisch gelagert, sein.

Damit kann eine Schwenkbewegung des Übergabearms durchgeführt werden, wobei der Übergabearm über das Schwenklager mit der mindestens einen Übergabeeinheit verbunden sein kann. In dem Beispiel der hydrostatischen Lagerung kann diese wasserbasiert sein. Die Vorrichtung kann dann weiter eine Wasserrückführung aufweisen.

In einem weiteren Beispiel kann die Vorrichtung eine Druckluftquelle aufweisen, die über eine Druckluftverbindung mit der Übergabeeinheit verbunden ist, wobei der Übergabearm an der mindestens einen Übergabeeinheit luftgelagert ist.

Wenn die Vorrichtung zum Herstellen von Behältern die Behälter mittels Blasluft umformt, kann eine Druckluftquelle die Versorgungseinheit für Blasluft sein. In diesem Fall kann die Nachrüstung von berührungslosen Schwenklagern vereinfacht werden.

Weiter ist denkbar, dass der Übergabearm beispielsweise mit einer Linearantriebseinheit zum Bewegen des Übergabearms verbunden sein kann.

Es kann damit auf eine Kurvensteuerung für das Bewegen des Übergabearms in radialer Richtung in Bezug auf den Rotorabschnitt verzichtet werden. Damit kann die Vorrichtung mit geringerem Aufwand hergestellt werden.

Im Folgenden wird die Erfindung anhand einer beispielhaften Ausführungsform mittels der beigefügten Zeichnung beschrieben. Es zeigen:
- Figur 1: eine schematische Darstellung einer Vorrichtung zum Herstellen von Behältern aus Vorformlingen aus thermoplastischem Material; und
- Figur 2: eine schematische Darstellung einer Übergabeeinheit.

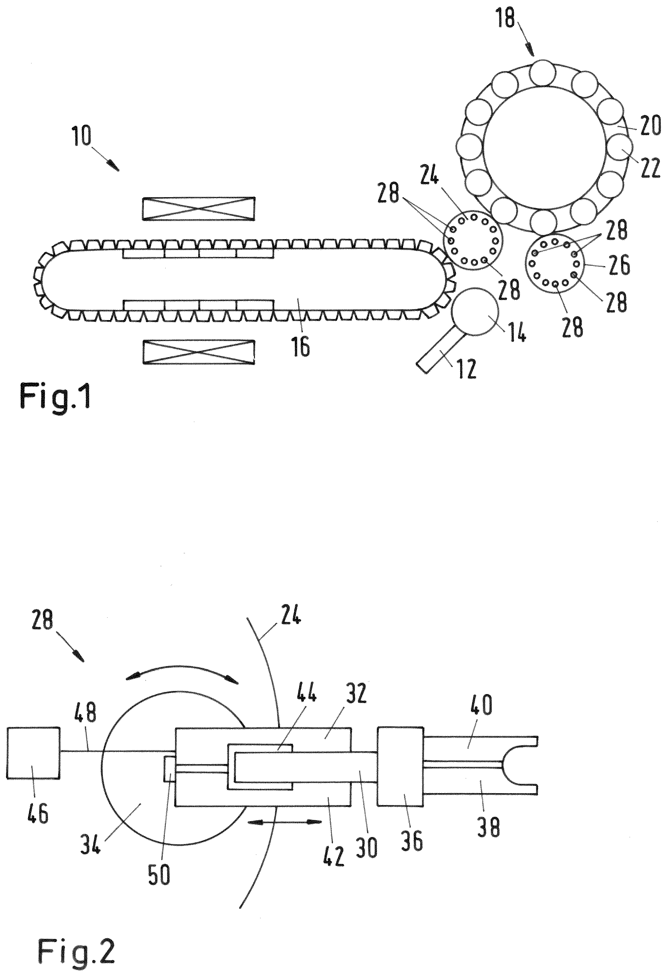

Gemäß Figur 1 wird die Vorrichtung zum Herstellen von Behältern aus Vorformlingen aus thermoplastischem Material wird im Folgenden in ihrer Gesamtheit mit dem Bezugszeichen 10 bezeichnet.

Die Vorrichtung 10 weist eine Zuführeinrichtung 12 zum Zuführen von Vorformlingen aus thermoplastischem Material, ein Transportrad 14, eine Heizstrecke 16 zum thermischen Konditionieren der Vorformlinge, ein erste Transporteinrichtung 24, eine Formeinrichtung 18 und eine zweite Transporteinrichtung 26.

Die mittels der Zuführeinrichtung 12 zugeführten Vorformlinge werden von dem Transportrad 14 aufgenommen und an die Heizstrecke 16 transportiert. Die Vorformlinge durchlaufen dann die Heizstrecke 16, wobei sie für den Umformungsprozess in der Formeinrichtung 18 thermisch konditioniert werden.

Nach dem Durchlaufen der Heizstrecke 16 werden die Vorformlinge an einer ersten Übergabeposition an eine erste Transporteinrichtung 24 übergeben, die als Übergaberad ausgebildet sein kann. Die Transporteinrichtung 24 weist eine Vielzahl von Übergabeeinheiten 28 auf, mit denen die Vorformlinge an der ersten Übergabeposition aufgenommen werden können. Jede Übergabeeinheit 28 kann dabei zwischen der ersten Übergabeposition und einer zweiten Übergabeposition bewegt werden.

An der zweiten Übergabeposition legen die Übergabeeinheiten 28 die Vorformlinge in Formen 22 der Formeinrichtung 18 ein. In den Formen 22 werden die Vorformlinge zu Behältern expandiert. Die Formen 22 können an einem Rad 20 befestigt sein, wobei das Rad 20 um eine Drehachse gedreht wird.

Nach dem Umformen werden die Behälter von einer zweiten Transporteinrichtung 26 aus den Formen 22 entnommen. Dazu weist die zweite Transporteinrichtung 26 ebenfalls eine Vielzahl von Übergabeeinheiten 28 auf.

Die Entnahme der Behälter erfolgt an einer ersten Übergabeposition der zweiten Transporteinrichtung 26. An einer zweiten Übergabeposition der zweiten Transporteinrichtung 26 können die Behälter durch die Übergabeeinheiten 28 an weitere Einrichtungen übergeben werden.

In Figur 2 ist eine erste Transporteinrichtung 24 dargestellt, wobei die zweite Transporteinrichtung 26 analog ausgebildet sein kann. Die im Folgenden beschriebenen Merkmale der ersten Transporteinrichtung 24 können daher auch Teil der zweiten Transporteinrichtung 26 sein.

Die Transporteinrichtung 24 weist mindestens eine Übergabeeinheit 28 auf. Die Übergabeeinheit 28 umfasst ein Greifelement 36 und einen Übergabearm 30. Das Greifelement 36 ist mit dem Übergabearm 30 verbunden und ist zum Greifen von Vorformlingen oder Behältern ausgebildet. Dazu kann das Greifelement 36 z. B. einen Halsbereich der Vorformlinge bzw. Behälter greifen. Das Greifelement 36 kann dafür Zangenteile 38, 40 aufweisen, die dazu ausgebildet sind mittels einer aktiven oder passiven Klemmung einen Halsbereich eines Vorformlings oder Behälters zu greifen.

Der Übergabearm 30 ist an der Übergabeeinheit 28 beweglich gelagert. Die bewegliche Lagerung des Übergabearms 30 ist berührungslos ausgebildet.

Dabei kann der Übergabearm 30 eine Schwenkbewegung und eine teleskopartige lineare Bewegung ausführen. Die berührungslose Lagerung kann jeweils lediglich die Schwenkbewegung, lediglich die teleskopartige lineare Bewegung oder beide Bewegungsarten betreffen. Der Übergabearm 30 kann optional auch weitere oder alternative Bewegungsarten ausführen, die auf einer berührungslosen Lagerung beruhen.

In dem in Figur 2 dargestellten Ausführungsbeispiel ist der Übergabearm 30 sowohl hinsichtlich der Schwenkbewegung als auch hinsichtlich der linearen teleskopartigen Bewegung berührungslos beweglich gelagert. Damit sei jedoch nicht ausgeschlossen, dass der Übergabearm 30 lediglich hinsichtlich der Schwenkbewegung oder lediglich hinsichtlich der teleskopartigen linearen Bewegung berührungslos gelagert sein kann.

In Bezug auf die Schwenkbewegung kann der Übergabearm 30 mit einem Schwenklager 34 verbunden sein. Das Schwenklager 34 ist dazu z. B. als Luftlager, Magnetlager oder hydrostatisches Lager ausgebildet. Es können auch alternative Arten der berührungslosen Lagerung vorgesehen sein. Bei einer Schwenkbewegung des Übergabearms 30 wird damit eine Reibung zwischen festen Materialien am Schwenklager 34 weitestgehend vermieden.

Wenn das Schwenklager 34 z. B. als Luftlager ausgebildet ist, kann das Schwenklager 34 eine Luftlagerbuchse aufweisen.

In Bezug auf die lineare teleskopartige Bewegung kann der Übergabearm 30 an einem linearen Führungselement 32 befestigt sein. Das lineare Führungselement 32 kann weite schwenkbar an dem Schwenklager 34 gelagert sein.

Das lineare Führungselement 32 kann ein Schlittenelement 44 aufweisen, dass berührungslos auf einem Schienenelement 42 gelagert ist. Das Schlittenelement 44 kann dabei entlang des Schienenelements 42 bewegt werden. Der Übergabearm 30 kann weiter an dem Schlittenelement 44 befestigt sein. Eine Bewegung des Schlittenelements 44 entlang des Schienenelements 42 bewirkt damit gleichzeitig eine Bewegung des Übergabearms 30 entlang des Schienenelements 42.

Die berührungslose Lagerung, die von dem linearen Führungselement 32 bereitgestellt wird, kann zum Beispiel eine Luftlagerung, eine magnetische Lagerung oder eine hydrostatische Lagerung umfassen. Auch alternative Arten von berührungslosen Lagerungen können vorgesehen werden.

Bei einer teleskopartigen linearen Bewegung des Übergabearms 30 wird damit eine Reibung zwischen festen Materialien des Lagers weitestgehend vermieden. Damit wird Abrieb vermieden und es sind für den Betrieb der Lagerung keine Schmierstoffe notwendig.

Wenn die berührungslose Lagerung des Übergabearms 30 mittels eines Luftlagers bereitgestellt wird und die Formeinrichtung 18 die Umformung der Vorformlinge mit Blasluft durchführt, kann die für das Lager benötigte Luft von der gleichen Druckluftquelle 46 bereitgestellt werden wie die Blasluft. Dazu kann die Druckluftquelle 46 über eine Druckluftverbindung 48 mit der Übergabeeinheit 28 verbunden sein. Die Blasluft bzw. Druckluft kann z. B. dazu verwendet werden, eine Luftlagerung für das Schlittenelement 44 auf dem Schienenelement 42 bereitzustellen. Weiter kann die Blasluft bzw. Druckluft kann weiter dazu verwendet werden, eine Luftlagerung am Schwenklager 34 bereitzustellen.

Die Blasluft bzw. Druckluft kann z. B. mit einem Druck zwischen 1 bar und 7 bar, vorzugsweise zwischen 2 bar und 6 bar, weiter vorzugsweise zwischen 3 bar und 5 bar, am meisten bevorzugt zwischen 3,5 bar und 4,5 bar bereitgestellt werden.

Wenn die berührungslose Lagerung mittels eines hydrostatischen Lagers bereitgestellt wird, kann eine wasserbasierte Lagerung vorgesehen werden. Dabei kann auch eine Wasserrückführung bereitgestellt werden.

Weiter kann die Übergabeeinheit 28 eine Linearantriebseinheit 50 aufweisen. Die Linearantriebseinheit 50 kann zum Bewegen des Übergabearms 30 in linearer Richtung ausgebildet sein. Dazu ist die Linearantriebseinheit 50 mit dem Übergabearm 30 verbunden.

Die Linearantriebseinheit 50 kann damit den Übergabearm 30 z. B. entlang des linearen Führungselements 32 bewegen. Die Bewegung kann in beide Richtungen entlang des linearen Führungselements 32 erfolgen.

### Bezugszeichenliste

- 10: Vorrichtung
- 12: Zuführeinrichtung
- 14: Transportrad
- 16: Heizstrecke
- 18: Formeinrichtung
- 20: Rad
- 22: Form
- 24: erste Transporteinrichtung
- 26: zweite Transporteinrichtung
- 28: Übergabeeinheit
- 30: Übergabearm
- 32: lineares Führungselement
- 34: Schwenklager
- 36: Greifelement
- 38: Zangenteil
- 40: Zangenteil
- 42: Schienenelement
- 44: Schlittenelement
- 46: Druckluftquelle
- 48: Druckluftverbindung
- 50: Linearantriebseinheit

## Patentansprüche

1. Vorrichtung zum Herstellen von Behältern aus Vorformlingen aus thermoplastischem Material, wobei die Vorrichtung (10) mindestens eine Transporteinrichtung (24, 26) mit mindestens einer Übergabeeinheit (28) zum Bewegen von Behältern und/oder Vorformlingen zwischen einer ersten Übergabeposition und einer zweiten Übergabeposition umfasst, wobei die Übergabeeinheit (28) ein Greifelement (36) zum Halten eines Behälters und/oder Vorformlings aufweist, wobei die Übergabeeinheit (28) einen Übergabearm (30) aufweist, mit dem das Greifelement (36) verbunden ist, **dadurch gekennzeichnet, dass** der Übergabearm (30) an der mindestens einen Übergabeeinheit (28) berührungslos beweglich gelagert ist.

2. Vorrichtung nach Anspruch 1, **dadurch gekennzeichnet, dass** der Übergabearm (30) an der mindestens einen Übergabeeinheit (28) mittels eines linearen Führungselements (32) berührungslos beweglich gelagert ist.

3. Vorrichtung nach Anspruch 2, **dadurch gekennzeichnet, dass** das lineare Führungselement (32) ein Schienenelement (42) und ein auf dem Schienenelement (42) berührungslos gelagertes, insbesondere luftgelagertes, magnetisch gelagertes oder hydrostatisch gelagertes, Schlittenelement (44) aufweist, das entlang des Schienenelements (42) beweglich und mit dem Übergabearm (30) verbunden ist.

4. Vorrichtung nach einem der Ansprüche 1 bis 3, **dadurch gekennzeichnet, dass** der Übergabearm (30) an der mindestens einen Übergabeeinheit (28) mittels eines Schwenklagers (34) berührungslos beweglich gelagert, insbesondere luftgelagert, magnetisch gelagert oder hydrostatisch gelagert, ist.

5. Vorrichtung nach einem der Ansprüche 1 bis 4, **dadurch gekennzeichnet, dass** die Vorrichtung (10) eine Druckluftquelle (46) aufweist, die über eine Druckluftverbindung (48) mit der Übergabeeinheit (28) verbunden ist, wobei der Übergabearm (30) an der mindestens einen Übergabeeinheit (28) luftgelagert ist.

6. Vorrichtung nach einem der Ansprüche 1 bis 5, **dadurch gekennzeichnet, dass** der Übergabearm (30) mit einer Linearantriebseinheit (50) zum Bewegen des Übergabearms (30) verbunden ist.

## Claims

1. Device for producing containers from preforms of thermoplastic material, wherein the device (10) comprises at least one transport device (24, 26) with at least one transfer unit (28) for moving containers and/or preforms between a first transfer position and a second transfer position, wherein the transfer unit (28) has a gripping element (36) for holding a container and/or preform, wherein the transfer unit (28) has a transfer arm (30) to which the gripping element (36) is connected, **characterised in that** the transfer arm (30) is mounted on the at least one transfer unit (28) so as to be movable without contact.

2. Device according to claim 1, **characterised in that** the transfer arm (30) is mounted on the at least one transfer unit (28) to be movable without contact by a linear guide element (32).

3. Device according to claim 2, **characterised in that** the linear guide element (32) has a rail element (42) and a carriage element (44) mounted on the rail element (42) in a contactless manner, in particular air-mounted, magnetically mounted or hydrostatically mounted, which carriage element is movable along the rail element (42) and is connected to the transfer arm (30).

4. Device according to one of claims 1 to 3, **characterised in that** the transfer arm (30) is mounted on the at least one transfer unit (28) to be movable without contact by a pivot bearing (34), in particular air-mounted, magnetically mounted or hydrostatically mounted.

5. Device according to one of claims 1 to 4, **characterised in that** the device (10) has a compressed air source (46) which is connected to the transfer unit (28) via a compressed air connection (48), the transfer arm (30) being air-mounted on the at least one transfer unit (28).

6. Device according to one of claims 1 to 5, **characterised in that** the transfer arm (30) is connected to a linear drive unit (50) for moving the transfer arm (30).

## Revendications

1. Dispositif pour fabriquer des récipients à partir de préformes en matériau thermoplastique, le dispositif (10) comprenant au moins un dispositif de transport (24, 26) avec au moins une unité de transfert (28) pour déplacer des récipients et/ou des préformes entre une première position de transfert et une deuxième position de transfert, l'unité de transfert (28) présentant un élément de préhension (36) pour maintenir un récipient et/ou une préforme, l'unité de transfert (28) présentant un bras de transfert (30) avec lequel l'élément de préhension (36) est relié, **caractérisé en ce que** le bras de transfert (30) est monté mobile sans contact sur l'au moins une unité de transfert (28).

2. Dispositif selon la revendication 1, **caractérisé en ce que** le bras de transfert (30) est monté mobile sans contact sur l'au moins une unité de transfert (28) au moyen d'un élément de guidage linéaire (32).

3. Dispositif selon la revendication 2, **caractérisé en ce que** l'élément de guidage linéaire (32) comprend un élément de rail (42) et un élément de chariot (44) monté sans contact sur l'élément de rail (42), en particulier monté sur palier à air, sur palier magnétique ou sur palier hydrostatique, l'élément de chariot (44) étant mobile le long de l'élément de rail (42) et relié au bras de transfert (30).

4. Dispositif selon l'une des revendications 1 à 3, **caractérisé en ce que** le bras de transfert (30) est monté mobile sans contact sur l'au moins une unité de transfert (28) au moyen d'un palier pivotant (34), en particulier sur palier à air, sur palier magnétique ou sur palier hydrostatique.

5. Dispositif selon l'une des revendications 1 à 4, **caractérisé en ce que** le dispositif (10) présente une source d'air comprimé (46) qui est reliée à l'unité de transfert (28) par une liaison d'air comprimé (48), le bras de transfert (30) étant monté sur palier à air sur l'au moins une unité de transfert (28).

6. Dispositif selon l'une des revendications 1 à 5, **caractérisé en ce que** le bras de transfert (30) est relié à une unité d'entraînement linéaire (50) pour déplacer le bras de transfert (30).
